# EUROPÄISCHE PATENTSCHRIFT

(11) **EP 1 189 406 B1**
(45) Veröffentlichungstag und Bekanntmachung des Hinweises auf die Patenterteilung: **10.01.2018**
(21) Anmeldenummer: 01119543.5
(22) Anmeldetag: 14.08.2001
(51) Int. Cl.: H04M 3/42, H04M 3/51, H04M 7/00

(54) **Verteiltes Kommunikationssystem mit zentraler CSTA-Schnittstelle zur Steuerung lokaler Funktionen**
Distributed communication system with central CSTA-interface for the control of local functions
Système de communication distribué avec interface centralisée selon le standard CSTA pour le contrôle des fonctions locales

(30) Priorität: 19.09.2000 DE 10046320
(43) Veröffentlichungstag der Anmeldung: 20.03.2002
(73) Patentinhaber: Unify GmbH & Co. KG, 80807 München (DE)
(72) Erfinder: Lügger, Volker, 58730 Fröndenberg (DE); Neuhaus, Ralf, 44534 Lünen (DE); Ücker, Rainer, 45472 Mülheim (DE)
(74) Vertreter: Fritzsche, Thomas

(56) Entgegenhaltungen:
- WO-A-96/27266
- WO-A1-99/22491
- DE-A- 10 044 436
- US-A- 5 915 012
- JOHNSON P: "THE IMPORTANCE OF SYSTEMS MANAGEMENT FOR A PARALLEL SYSPLEX" IBM SYSTEMS JOURNAL, IBM CORP. ARMONK, NEW YORK, US, Bd. 36, Nr. 2, 1997, Seiten 301-326, XP000656514 ISSN: 0018-8670
- "CallPath CallCoordinator/CICS for OS/390; General Information; Version 2, Release 1; Document Number GC34-5394-01" Juni 2000 (2000-06) , IBM XP002257650 * Chapter 4; Parallel Sysplex *
- "HiPath AllServe 150 V1.0" [Online] Februar 2001 (2001-02) , SIEMENS XP002257651 Gefunden im Internet: <URL: www.siemens.com> [gefunden am 2003-10-13]

## Beschreibung

Die vorliegende Erfindung betrifft ein verteiltes Kommunikationssystem gemäß dem Oberbegriff des Patentanspruchs 1.

Moderne Kommunikationssysteme bestehen häufig aus mehreren räumlich verteilten, untereinander verbundenen Kommunikationsanlagen. Jede dieser Kommunikationsanlagen verfügt dabei über eine eigene Vermittlungsintelligenz und eine eigene lokale Datenbank zur Speicherung von kommunikationsanlagen-spezifischen Daten. Die lokalen kommunikationsanlagen-spezifischen Datenbanken dienen dabei einer Speicherung von für einen eigenständigen Betrieb - in der Literatur häufig als 'Standalone-Betrieb' bezeichnet - einer Kommunikationsanlage notwendigen Daten, beispielsweise von Teilnehmernummern, Berechtigungen, Amtsleitungen, Durchwahlnummern, Rufnummern, Konfigurationsdaten, Kurzwahlzielen, usw. Um aus diesen Kommunikationsanlagen einen Netzverbund von vernetzten Kommunikationsanlagen zu realisieren, müssen die einzelnen Kommunikationsanlagen jeweils für sich entsprechend konfiguriert werden, d.h. mit den in den anderen Kommunikationsanlagen gespeicherten Daten abgeglichen werden.

Die Kommunikationsanlagen verfügen in der Regel zusätzlich über Software-Schnittstellen - in der Literatur häufig als Software-Interfaces oder auch als Programmier-Schnittstellen bezeichnet - über die bestimmte Steuerungsfunktionen der jeweiligen Kommunikationsanlage von außen, z.B. ausgehend von einem über eine Hardware-Schnittstelle an die Kommunikationsanlage angeschossenen Datenverarbeitungseinrichtung ausgeführt werden können. Ein Beispiel für eine derartige Software-Schnittstelle ist die von der ECMA (European Computer Manufactura Association) standardisierte CSTA-Schnittstelle (Computer Supported Telecommunications Applications), auf die über eine externe Hardware-Schnittstelle wie beispielsweise eine V.24- oder eine S₀-Schnittstelle zugegriffen werden kann.

In einem modernen aus mehreren untereinander vernetzten Kommunikationseinrichtungen bestehenden Kommunikationssystem kann die externe Datenverarbeitungseinrichtung auch direkt an das die Kommunikationseinrichtungen verbindende Netzwerk angeschlossen sein. Auf der externen Datenverarbeitungseinrichtung ablaufende Kommunikationsanwendungen können somit über ein derartiges Netzwerk auf die Software-Schnittstellen der jeweiligen Kommunikationseinrichtungen im Kommunikationssystem zugreifen. Im Rahmen bekannter Kommunikationsanwendungen zum Ausführen von Steuerungsfunktion für eine Kommunikationseinrichtung besteht jedoch nur die Möglichkeit eine einzelne Kommunikationseinrichtung gezielt ansprechen zu können. In einem Kommunikationssystem mit einer Vielzahl verteilter und untereinander verbundener Kommunikationseinrichtungen sind somit für jede Kommunikationseinrichtung einrichtungs-spezifische Anwendungen notwendig. Eine zentrale und übergreifende Anwendungsrealisierung ist mittels der bestehenden Kommunikationsanwendungen bisher nicht möglich.

Der Artikel Johnson, P: "The importance of systems management for a Parallel Sysplex", IBM Systems Journal, IBM Corp., Armonk, New York, US, Bd. 36, Nr. 2, 1997, Seiten 301-326, ISSN: 0018-8670, befasst sich mit der Administration eines Verbundes von IBM-Rechnern IBM S/390® mit dem Betriebssystem MVS. Die Parallel Sysplex (System Complex) Integration wird in dem Artikel "CallPath CallCoordinator/CICS for OS/390; General Information"; Version 2, Release 1; Document Number GC34-5394-01", Juni 2000 (2000-06), IBM, Seiten 1-9, näher erläutert.

US 5,915,012 offenbart ein Routing von Anrufen innerhalb eines globalen Call Centers, das zwei Call Center mit jeweils einem Switch und einem CTI-Server aufweist, wobei der Switch des einen Call Centers über eine Verbindungsleitung ("tie line")mit dem Switch des anderen verbunden ist.

Aus der WO99/22491 A1 ist eine Anordnung zum Anschließen von Netzelementen von Telekommunikationsanlagen an mindestens ein Betriebssystem eines Telekommunikationsverwaltungssystems über eine vorgegebene Schnittstelle bekannt. Hierzu ist ein sogenannter Adapter Q3A vorgesehen über den räumlich verteilte Betriebssysteme mittels eines Datennetzes auf ausgewählte Netzelemente in mindestens zwei verschiedenen Telekommunikationsanlagen zugreifen können. Um erkennen zu können, welches der in unterschiedlichen Telekommunikationsanlagen befindlichen Netzelemente die von einem Betriebssystem geforderte Funktion (Objekt) durchzuführen hat, ist eine sogenannte Objektdatenbank zentral angeordnet, in der jede Funktion und jede Eigenschaft, die jedes der einzelnen Netzelemente in den verschiedenen Telekommunikationsanlagen besitzt (bzw. ausführen kann) abgebildet ist.

Der vorliegenden Erfindung liegt daher die Aufgabe zugrunde, Maßnahmen bereitzustellen, durch die eine zentrale Durchführung von Steuerungsfunktionen für eine Mehrzahl von Kommunikationseinrichtungen innerhalb eines Kommunikationssystems ermöglicht wird.

Erfindungsgemäß wird die Aufgabe durch das Kommunikationssystem des Patentanspruchs 1 gelöst.

Gemäß der vorliegenden Erfindung befindet sich auf einer zentralen Datenverarbeitungseinrichtung-im weiteren als Server bezeichnet - eine zentrale Software-Schnittstelle, durch die übergeordnete logische Schnittstelle abbildet werden. Einer auf dem Server ablaufenden Kommunikationsanwendung stellt sich das verteilte Kommunikationssystem somit als eine Einheit, mit einer entsprechend hohen Anzahl an Hardware-Ressourcen, wie beispielsweise Teilnehmeranschlüssen, Amtsanschlüssen und Rufnummern, dar.

Bei der Erfindung erkennt die zentrale Software-Schnittstelle automatisch, in welcher der Kommunikationseinrichtungen innerhalb des Kommunikationssystems eine jeweilige Steuerungsfunktion auszuführen ist und steuert den Datenaustausch zur Durchführung der Steuerungsfunktion mit der entsprechenden Kommunikationseinrichtung entsprechend.

Ein Vorteil der vorliegenden Erfindung besteht unter anderem darin, dass bestehende Kommunikationsanwendungen unverändert weiter verwendet werden können. Außerdem können neue Kommunikationsanwendungen unabhängig von der Struktur eines Kommunikationssystems entwickelt werden. Somit kann auf einfache Weise auch für räumlich weit auseinanderliegende Einzelsysteme, z.B. in anderen Städten und Ländern, eine zentrale Kommunikationsanwendung entwickelt und genutzt werden.

Vorteilhafte Ausgestaltungen der vorliegenden Erfindung sind in den Unteransprüchen angegeben.

Der Server greift zum Ausführen einer Steuerungsfunktion einer Kommunikationsanlage, z.B. zum Aktivieren bzw. Deaktivieren eines Leistungsmerkmales, zum Ausführen einer Telekommunikationsanwendung oder von Administrationsfunktionen, auf eine bestimmte Ressource (z.B. Rufnummer, Teilnehmeranschluss, Amtsleitung) des Kommunikationssystems zu. Die zentrale Software-Schnittstelle erkennt dabei automatisch, z.B. durch einen Zugriff auf eine die entsprechenden Daten verwaltende Speichervorrichtung, in welcher Kommunikationseinrichtung sich die jeweilige Ressource befindet und kommuniziert zum Ausführen sich die jeweilige Ressource befindet und kommuniziert zum Ausführen der Steuerungsfunktion mit der jeweiligen Kommunikationseinrichtung über das Netzwerk.

Vorzugsweise handelt es sich bei dem Netzwerk um eine IP-orientiertes (Internet Protocol) Netzwerk, z.B. um ein LAN (Local Area Network) oder ein WAN (Wide Area Network).

Gemäß einer Ausgestaltung der Erfindung sind in der Speichervorrichtung des Servers die Rufnummern (bzw. Rufnummernbereiche) einer jeweiligen Kommunikationseinrichtung des Kommunikationssystems abgespeichert. Außerdem sind in der Speichervorrichtung Informationen darüber enthalten, welche Adresse (z.B. IP-Adresse) der jeweiligen Kommunikationseinrichtung im Netzwerk zugeordnet ist.

Mit der vorliegenden Erfindung werden durch die vorteilhafterweise die lokalen Software-Schnittstellen der Kommunikationseinrichtungen als Software-Schnittstelle gebildet, die nach dem CSTA-Standard arbeitet, da sich hierdurch die Programmierung für die Übertragung von Informationen zwischen der zentralen und den lokalen Software-Schnittstellen vereinfachen lässt.

Die vorliegende Erfindung wird nachfolgend anhand bevorzugter Ausführungsbeispiele unter Bezugnahme auf die beigefügten Zeichnungen näher erläutert.

Dabei zeigen:
- Fig. 1:: eine schematische Darstellung eines erfindungsgemäßen Kommunikationssystems, bestehend aus zwei Kommunikationsanlagen und einem zentralen Server; und
- Fig. 2:: ein Beispiel für eine Anordnung eines verteilten Kommunikationssystems.

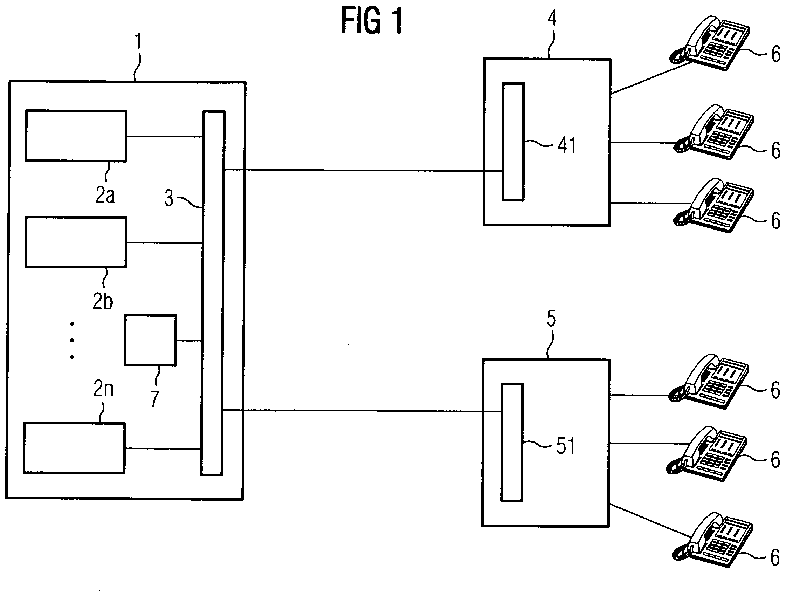

Fig. 1 zeigt ein Strukturbild zur schematischen Darstellung eines verteilten Kommunikationssystems, bestehend aus einem Server 1 und zwei Kommunikationsanlagen 4, 5. Über die Kommunikationsanlagen erfolgt ein Anschluß von Endgeräten 6, z.B. von Telefone oder Datenverarbeitungseinrichtungen an das Kommunikationssystem.

Eine Verbindung der Kommunikationsanlagen 4, 5 untereinander und mit dem Server 1 kann beispielsweise über ein lokales Netzwerk (LAN: Local Area Network), ein globales Netzwerk (WAN: Wide Area Network), z.B. das Internet, oder auch über leitungsvermittelnde Kommunikationsnetze, z.B. ein ISDN-Netz, erfolgen. Eine bidirektionale Datenübertragung erfolgt dabei mittels eines sogenannten Tunnelungsmechanismus, bei dem die Meldungen eines kommunikationsanlagen-spezifischen Vernetzungsprotokolls in Meldungen des entsprechenden Übertragungsprotokolls (z.B. das IP-Protokoll oder das ISDN-Protokoll) verpackt und über das Netzwerk übermittelt werden.

Die Kommunikationsanlagen 4, 5 verfügen jeweils über eine lokale Software-Schnittstelle 41, 51, die im vorliegenden Ausführungsbeispiel nach dem CSTA-Standard ausgebildet ist. Über eine derartige Software-Schnittstelle 41, 51 lassen sich durch kommunikationsanlagen-externe Einrichtungen Funktion der jeweiligen Kommunikationsanlage 4, 5 beeinflussen, z.B. durch ein Aktivieren bzw. Deaktivieren von Leistungsmerkmalen, ein Ausführen von Kommunikationsanwendungen oder ein Konfigurieren der jeweiligen Kommunikationsanlage mittels einer Administrationsanwendung.

Erfindungsgemäß ist im Server 1 eine zentrale Software-Schnittstelle 3 implementiert, welche die lokalen Software-Schnittstellen 41, 51 der Kommunikationsanlagen 4, 5 des Kommunikationssystems auf eine einzige übergeordnete logische Software-Schnittstelle abbildet. Auf diese Weise stellt sich das Kommunikationssystem für auf dem Server 1 ablaufende Kommunikationsanwendungen 2a,...,2n wie eine einzelne Einrichtung mit nur einer Software-Schnittstelle dar. Durch die Kommunikationsanwendungen 2a,...,2n wird die Gesamtheit der Funktionen bezeichnet, die durch den Server 1 im Zusammenspiel mit den Kommunikationsanlagen 4, 5 ausgeführt werden können, wie z.B. eine Aktivierung bzw. Deaktivierung von Leistungsmerkmalen oder eine Ausführung von Administrationsanwendungen.

Jede der Kommunikationsanwendungen 2a,...,2n führt dabei Funktionen aus, durch die bestimmte Ressourcen des Kommunikationssystems belegt werden, z.B. eine oder mehrere bestimmte Rufnummern, Amtsleitungen, etc. Die zentrale Software-Schnittstelle 3 erkennt automatisch, in welcher der Kommunikationsanlagen 4, 5 innerhalb des Kommunikationssystems die jeweilige Funktion auszuführen ist. Wird beispielsweise vom Server 1 ein Leistungsmerkmal für eine bestimmte Rufnummer in der Kommunikationsanlage 4 aktiviert, so ermittelt die zentrale Software-Schnittstelle 3 anhand eines Zugriffes auf eine Speichervorrichtung 7 des Servers 1 die Adresse - beispielsweise die IP-Adresse - der entsprechenden Kommunikationsanlage 4 im Netzwerk und versendet die entsprechenden Befehle zur Ausführung dieses Leistungsmerkmales an die Kommunikationsanlage 4 über das Netzwerk.

Die zentrale Software-Schnittstelle 3 führt somit eine Zuordnung der jeweiligen Ressourcen des Kommunikationssystems zu einer entsprechenden Kommunikationsanlage 4, 5 durch und aktiviert auf diese Weise die jeweilige Steuerungsfunktion in der entsprechenden Kommunikationsanlage 4, 5.

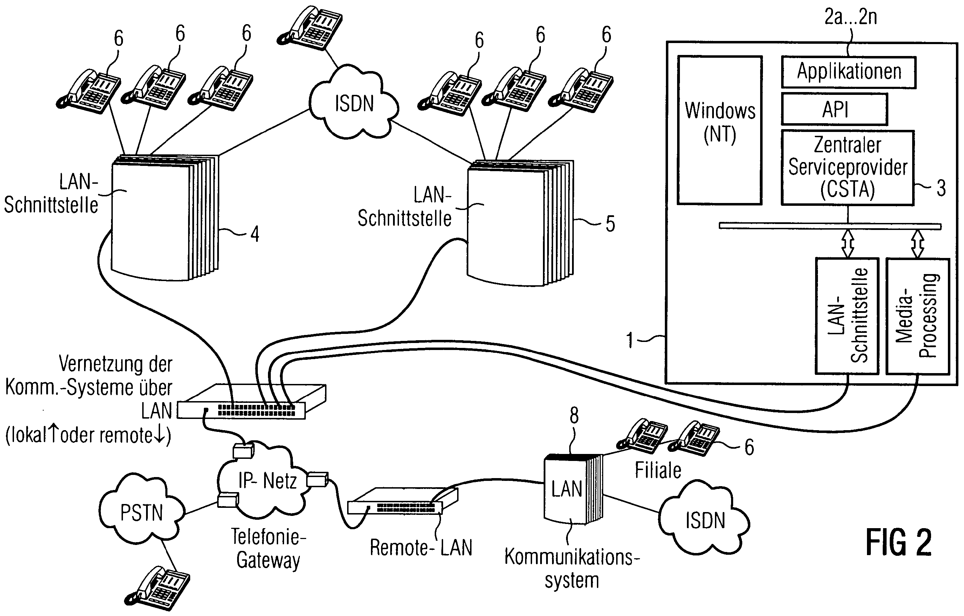

Fig. 2 zeigt ein Strukturbild zur schematischen Darstellung einer beispielhaften Anordnung eines verteilten - vorzugsweise privaten - Kommunikationssystems. Die einzelnen Einheiten des Kommunikationssysteme - im vorliegenden Ausführungsbeispiel der Server 1 und die Kommunikationsanlagen 4, 5 - sind über ein Ethernet-LAN vernetzt und können über dieses Ethernet-LAN Signalisierungs- und Sprachdaten austauschen. Eine weitere Kommunikationsanlage 8, beispielsweise einer Filiale eines Unternehmens, ist über ein IP-Netzwerk - beispielsweise das 'Internet' - mit dem Ethernet-LAN verbunden, so daß eine globale Ausdehnung des - vorzugsweise privaten - Kommunikationssystems ermöglicht wird.

Auf dem Server 1 ist eine auf der Erfindung beruhende zentrale Software-Schnittstelle 3 implementiert, in der die - in der Figur nicht dargestellten - Software-Schnittstellen der verteilten Kommunikationsanlagen 4, 5, 8 zusammengefaßt werden.

In der Figur ist die zentrale Software-Schnittstelle 3 als zentraler Serviceprovider dargestellt, durch den gleichzeitig eine Umsetzung der kommunikationsanlagen-spezifischen Software-Schnittstellen - im vorliegenden Ausführungsbeispiel von CSTA-orientierten Schnittstellen - auf eine andere Software-Schnittstelle - im vorliegenden Ausführungsbeispiel auf eine API-Schnittstelle (Application Programming Interface) des Servers 1, z.B. auf eine TAPI-Schnittstelle (Telephoning-API), erfolgt. Der zentrale Server 1 läuft unter dem Betriebssystem 'Windows NT' der Firma Microsoft, durch welches eine Steuerung der einzelnen Funktionen des Servers 1, u.a. der auf dem Server 1 ablaufenden Kommunikationsanwendungen 2a,...,2n, erfolgt.

Gegenüber den auf dem Server 1 ablaufenden Kommunikationsanwendungen 2a,...,2n stellt sich durch die Abbildung (Zusammenfassung) der Einzelsysteme des Kommunikationssystems in einer übergeordneten Schnittstelle das verteilte Kommunikationssystem als ein einzelnes System dar (Single System Image). Das heißt, daß eine Kommunikationsanwendung 2a,...,2n - über die zusammengefaßten Schnittstellen - nur ein einziges System mit einer entsprechend hohen Anzahl an Ressourcen (z.B. Teilnehmeranschlüsse, Amtsanschlüsse, Rufnummern, usw.) sieht. Eine für ein Einzelsystem erstellte Kommunikationsanwendung 2a,...,2n kann somit ohne Veränderung auch für ein verteiltes Kommunikationssystem eingesetzt und somit völlig losgelöst von der Art der darüberliegenden Hardware oder einer eventuell verteilten Struktur entwickelt werden.

Die Kommunikationsanwendungen 2a,...,2n gemäß der vorliegenden Erfindung können, wie in der Figur gezeigt, auch für räumlich weit auseinanderliegende Einzelsysteme, z.B. Kommunikationsanlagen einer Filiale eines Unternehmens in anderen Städten und Ländern, genutzt werden.

## Patentansprüche

1. Kommunikationssystem, bestehend aus mehreren Kommunikationseinrichtungen (4,5) mit Ressourcen wie beispielsweise Teilnehmeranschlüssen, Amtsanschlüssen und Rufnummern und einer zentralen Datenverarbeitungseinrichtung (1), die über ein Netzwerk miteinander verbunden sind,
bei dem durch die zentrale Datenverarbeitungseinrichtung (1) Kommunikationsanwendungen (2a,...,2n) ausführbar sind, und bei dem die Kommunikationseinrichtungen (4, 5) jeweils über eine lokale Software-Schnittstelle (41, 51) verfügen, über die Steuerfunktionen in der jeweiligen Kommunikationseinrichtung (4, 5) steuerbar sind,
**gekennzeichnet durch**,
eine in der zentralen Datenverarbeitungseinrichtung (1) angeordnete zentrale Software-Schnittstelle gemäß dem CSTA-Standard (3) zur Abbildung der jeweiligen lokalen Software-Schnittstelle (41, 51) der Kommunikationseinrichtungen (4,5) auf eine übergeordnete logische Schnittstelle, so dass die Ressourcen des verteilten Kommunikationssystems sich der Kommunikationsanwendung als einziges System darstellen
und dass die zentrale Software-Schnittstelle (3) beim Zugriff einer, für das Einzelsystem erstellten Kommunikationsanwendung auf eine Ressource automatisch erkennt, in welcher Kommunikationseinrichtung (4, 5) innerhalb des Kommunikationsnetzes eine jeweilige Steuerungsfunktion auszuführen ist und einen Datenaustausch zur Durchführung dieser Steuerungsfunktion mit der entsprechenden Kommunikationseinrichtung (4, 5) steuert.

2. Kommunikationssystem nach Anspruch 1,
**gekennzeichnet durch**
eine in der zentralen Datenverarbeitungseinrichtung (1) angeordnete Speichervorrichtung (7) zum Speichern von für eine jeweilige Kommunikationseinrichtung (4, 5) verfügbaren Rufnummern in Beziehung zu einer die jeweiligen Kommunikationseinrichtung (4, 5) eindeutig identifizierende Adresse im Kommunikationssystem.

3. Kommunikationssystem nach Anspruch 1 oder 2,
**dadurch gekennzeichnet,**
**dass** die lokalen Software-Schnittstellen (41, 51) gemäß dem CSTA-Standard (Computer Supported Telecommunications Applications) ausgebildet sind.

4. Kommunikationssystem nach einem der vorhergehenden Ansprüche,
**dadurch gekennzeichnet,**
**dass** das Netzwerk ein IP-orientiertes (Internet Protocol) Netzwerk ist.

5. Kommunikationssystem nach einem der vorhergehenden Ansprüche,
**dadurch gekennzeichnet,**
**dass** die Kommunikationseinrichtungen (4,5) private Kommunikationsanlagen sind.

## Claims

1. A communications system, consisting of multiple communication devices (4, 5) having resources such as subscriber lines, exchange lines, and call numbers, and a central data processing device (1), which are interconnected via a network,
wherein the central data processing device (1) can execute communication applications (2a ,..., 2n) and
wherein the communication devices (4, 5) each have a local software interface (41, 51) via which the control functions in the respective communication device (4, 5) can be controlled, **characterized by**
a central software interface according to the CSTA standard (3) disposed in the central data processing device (1) for mapping the respective local interface (41, 51) of the communication devices (4, 5) onto a superordinate logical interface, such that the resources of the distributed communication system present themselves to the communication device as a single system;
and that the central software interface (3), when a communication device created for the single system accesses a resource, automatically detects the communication device (4, 5) within the communication network in which a respective control function is to be executed and controls a data exchange for performing this control function with the respective communication device (4, 5).

2. The communication system according to claim 1,
**characterized by**
a memory device (7) disposed in the central data processing device (1) for storing call numbers available to a respective communication device (4, 5) in relation to an address that uniquely identifies the respective communication device (4, 5) in the communication system.

3. The communication system according to claim 1 or 2,
**characterized in that**
the local software interfaces (41, 51) are configured according to the Computer Supported Telecommunications Applications (CSTA) standard.

4. The communication system according to any one of the preceding claims,
**characterized in that**
the network is an Internet Protocol (IP) oriented network.

5. The communication system according to any one of the preceding claims,
**characterized in that**
the communication devices (4, 5) are private communication installations.

## Revendications

1. Système de communication se composant de plusieurs dispositifs de communication (4, 5) avec des ressources tels que des raccordements d'abonnés, des raccordements au réseau et des numéros d'appels et un dispositif de traitement de données central (1) qui sont raccordés entre eux par un réseau,
pour lequel par le dispositif de traitement de données central (1) des applications de communication (2a, ..., 2n) sont réalisables, et
pour lequel les dispositifs de communication (4, 5) disposent respectivement d'une interface logicielle locale (41, 51), par laquelle des fonctions de commande peuvent être commandées dans le dispositif de communication respectif (4, 5),
**caractérisé par**
une interface logicielle centrale agencée dans le dispositif de traitement de données central (1) selon la norme CSTA (3) pour la réalisation de l'interface logicielle locale (41, 51) respective des dispositifs de communication (4, 5) sur une interface logique supérieure de sorte que les ressources du système de communication distribué se présentent comme système unique,
et en ce que l'interface logicielle centrale (3) reconnaît automatiquement lors de l'accès d'une application de communication établie pour le système unique à une ressource, dans lequel dispositif de communication (4, 5) dans le réseau de communication une fonction de commande respective doit être réalisée et commande un échange de données pour la réalisation de cette fonction de commande avec le dispositif de communication (4, 5) correspondant.

2. Système de communication selon la revendication 1,
**caractérisé par**
un dispositif d'enregistrement (7) agencé dans le dispositif de traitement de données central (1) pour l'enregistrement des numéros d'appel disponibles pour un dispositif de communication respectif (4, 5) en rapport avec une adresse identifiant clairement le dispositif de communication (4, 5) respectif dans le système de communication.

3. Système de communication selon la revendication 1 ou 2,
**caractérisé en ce que**
les interfaces logicielles locales (41, 51) sont réalisées selon la norme CSTA (applications de télécommunications supportées par ordinateur).

4. Système de communication selon l'une des revendications précédentes,
**caractérisé en ce que**
le réseau est un réseau orienté IP (protocole Internet).

5. Système de communication selon l'une des revendications précédentes,
**caractérisé en ce que**
les dispositifs de communication (4, 5) sont des installations de communication privées.
